# EUROPÄISCHE PATENTSCHRIFT

(11) **EP 3 017 186 B1**
(45) Veröffentlichungstag und Bekanntmachung des Hinweises auf die Patenterteilung: **31.05.2017**
(21) Anmeldenummer: 14744766.8
(22) Anmeldetag: 25.06.2014
(51) Int. Cl.: F02N 11/08, F02N 11/10

(54) **KRAFTWAGEN MIT EINER FERNSTARTEINHEIT**
MOTOR VEHICLE COMPRISING A REMOTE STARTER UNIT
VÉHICULE AUTOMOBILE ÉQUIPÉ D'UNE UNITÉ DE DÉMARRAGE À DISTANCE

(30) Priorität: 01.07.2013 DE 102013010984
(43) Veröffentlichungstag der Anmeldung: 11.05.2016
(73) Patentinhaber: Audi AG, 85045 Ingolstadt (DE)
(72) Erfinder: GEIßENHÖNER, Martin, 85055 Ingolstadt (DE)
(74) Vertreter: Brandt, Kai
(86) Internationale Anmeldenummer: PCT/EP2014/001727
(87) Internationale Veröffentlichungsnummer: WO 2015/000562

(56) Entgegenhaltungen:
- DE-A1-102010 052 547
- US-A1- 2005 225 175
- US-A1- 2009 265 048
- US-A1- 2012 078 443

## Beschreibung

Die Erfindung betrifft einen Kraftwagen mit einer Fernstarteinheit. Eine solche Fernstarteinheit ist dazu ausgelegt, drahtlos ein Fernstartsignal von außerhalb des Kraftwagens zu empfangen und bei Empfangen des Fernstartsignals eine Verbrennungskraftmaschine des Kraftwagens zu starten und Geräte zu betreiben, die das Losfahren mit dem Kraftwagen vorbereiten. Eine Fernstarteinheit kann dazu genutzt werden, den Kraftwagen beispielsweise in besonders kalten Regionen durch ein Fernstartsignal warmlaufen zu lassen, bevor ein Fahrer in den Kraftwagen einsteigt und losfährt.

Ein Kraftwagen mit einer Fernstarteinheit ist beispielsweise aus der US 2011/0202201 A1 bekannt. Der darin beschriebene Kraftwagen kann mittels eines Funksignals in den Zustand "ferngestartet" überführt werden. Bei dem Kraftwagen ist vermieden, dass für den Fall, dass eine Person mittels des Funksignals den Kraftwagen fernstartet, dann in den Kraftwagen einsteigt und einen Zündschlüssel ins Zündschloss steckt, hierdurch die Verbrennungskraftmaschine des Kraftwagens zunächst wieder ausgeschaltet wird, weil der Zündschlüssel zunächst im Zündschloss nach dem Einstecken in der Aus-Stellung steht. Die Verbrennungskraftmaschine läuft weiter und ermöglich es so dem Fahrer, zunächst eine zum Losfahren nötige Bedienhandlung, wie beispielsweise das Herumdrehen des Zündschlüssels im Zündschloss, durchzuführen. Danach wird der Kraftwagen dann in einen Normalzustand überführt, wie er ihn auch innehaben würde, wenn die Person den Kraftwagen direkt aus dem Aus-Zustand durch Herumdrehen des Zündschlüssels gestartet hätte.

Aus der US 2009/0265048 A1 ist ebenfalls ein Kraftwagen mit einer Fernstarteinheit beschrieben. Der Kraftwagen weist eine Autorisierungsvorrichtung auf, die verhindert, dass nach einem Fernstart, wenn sich der Kraftwagen im Zustand "ferngestartet" mit laufender Verbrennungskraftmaschine befindet, eine nicht-autorisierte Person in den Kraftwagen springt und damit davonfährt. Hierzu wird durch eine Autorisierungseinrichtung überprüft, ob sich ein autorisierter Funkschlüssel im Inneren des Kraftwagens befindet, während eine Person versucht, mit dem ferngestarteten Kraftwagen loszufahren. Auch die US 2012/0078443 offenbart die Idee, das Wegfahren einer nichtautorisierten Person mit einem ferngestarteten Kraftfahrzeug zu unterbinden, im Fall einer autorisierten Person aber Komfortelektronik einzuschalten und dabei den Motor weiter laufen zu lassen. Weitere Kraftwagen mit Fernstarteinrichtung sind aus der US 2008/0203815 A1, der US 5,757,086 A, der DE 10 2009/022 638 A1 und der DE 10 2008 039 303 A1 bekannt. Auch diese Kraftwagen weisen Sicherungseinrichtungen gegen ein unautorisiertes Benutzen des ferngestarteten Kraftwagens auf. Aus dem Zustand "ferngestartet" kann der Kraftwagen also in den Normalzustand mit Motorlauf und Nutzung aller Geräte des Kraftwagens, nur durch eine autorisierte Person überführt werden. Nutzt eine unautorisierte Person den ferngestarteten Kraftwagen, so wird dieser in den Aus-Zustand überführt.

Bei einem Kraftwagen mit Fernstarteinheit ist im Zustand "ferngestartet" nur die Nutzung einer vorbestimmten Gerätegruppe möglich, die eines oder mehrere Geräte des Kraftwagens umfasst, mit denen das Losfahren vorbereitet wird. In der Regel ist eines dieser Geräte eine Klimatisierungseinrichtung zum Beheizen des Fahrgastraumes oder des Motors. Möchte nun eine Person in einem ferngestarteten Kraftwagen zunächst ein nicht für das Losfahren nötiges Gerät benutzen, also ein Komfort-Gerät, wie beispielsweise einen Fensterheber, so lässt sich ein solches Gerät im Zustand "ferngestartet" in der Regel nicht anschalten. Die Person muss also zunächst mit dem Kraftwagen kurz anfahren, damit der Steuermechanismus der Fernstarteinheit deaktiviert wird. Erst dann kann die Person beispielsweise die Verbrennungskraftmaschine selbst ausschalten und mit eingeschalteter Zündung die Komfort-Geräte bedienen.

Der Erfindung liegt die Aufgabe zugrunde, in einem Kraftwagen mit einer Fernstarteinheit einer Bedienperson eine bessere Kontrollmöglichkeit über die Fernstarteinheit zu geben.

Die Aufgabe wird durch einen Kraftwagen gemäß Patentanspruch 1 und ein Verfahren gemäß Patentanspruch 10 gelöst. Vorteilhafte Weiterbildungen der Erfindung sind durch die Unteransprüche gegeben.

Bei dem erfindungsgemäßen Kraftwagen ist dessen Fernstarteinheit dazu ausgelegt, ein Fernstartsignal drahtlos von außerhalb des Kraftwagens zu empfangen, also beispielsweise ein entsprechendes Funksignal einer Fernbedienung, und dann bei Empfangen des Fernstartsignals eine Verbrennungskraftmaschine des Kraftwagens zu starten. Des Weiteren wird eine vorbestimmte erste Gerätegruppe aktiviert, die aus zumindest einem Gerät des Kraftwagens besteht, das bei Abwesenheit des Fahrers ein Losfahren mit dem Kraftwagen vorbereiten soll, also beispielsweise die bereits erwähnte Klimatisierungseinrichtung. Andere Geräte des Kraftwagens, die nicht zu der ersten Gerätegruppe gehören, werden aber nicht gestartet, sondern bleiben von der Spannungsversorgung, wie etwa der Fahrzeugbatterie, getrennt oder auf eine andere Weise deaktiviert, so dass sie sich nicht bedienen lassen. Insgesamt wird hier bei Empfangen des Fernstartsignäls der Kraftwagen durch die Fernstarteinheit in den Zustand "ferngestartet" überführt: die Verbrennungskraftmaschine läuft, das zumindest eine Gerät der ersten Gerätegruppe ist aktiviert und ansonsten ist aber der Kraftwagen nicht für eine Nutzung durch eine Person vorbereitet. So kann also beispielsweise weder ein Fensterheber betrieben werden noch ist z.B. die Beleuchtung des Kombiinstruments eingeschaltet.

Um hierbei einer Bedienperson eine Kontrollmöglichkeit über den Zustand des Kraftwagens zu geben, ist bei dem erfindungsgemäßen Kraftwagen eine Steuereinheit vorgesehen, die dazu ausgelegt ist, im Zustand "ferngestartet" und noch vor einem Losfahren mit dem Kraftwagen zu ermitteln, ob in dem Kraftwagen anstelle einer Bedienhandlung, die mit dem Losfahren zusammenhängt, im oder am Kraftwagen eine Person eine andere vorbestimmte, zum Losfahren aber ungeeignete Bedienhandlung ausführt. Eine solche ungeeignete Bedienhandlung kann beispielsweise das Betätigen des Fensterhebers sein. Es kann aber auch als Bedienhandlung z.B. erkannt werden, ob die Person bei dem Versuch loszufahren den Kraftwagen nicht beispielsweise durch Treten eines Bremspedals sichert. Wird durch die Steuereinrichtung die ungeeignete Bedienhandlung erkannt, so wird für diesen Fall durch die Steuereinrichtung der Kraftwagen in einen Zustand "Zündung ein" überführt, in welchem die Verbrennungskraftmaschine ausgeschaltet ist und eine vorbestimmte zweite Gerätegruppe aus zumindest einem Komfort-Gerät des Kraftfahrzeugs betriebsbereit geschaltet ist oder sogar eingeschaltet ist. Beispielsweise kann jedes Komfort-Gerät hierzu an eine Batterie des Kraftwagens zugeschaltet sein oder z.B. über ein Bussignal aktiviert oder in einen Stand-by-Zustand geschaltet worden sein. Mit anderen Worten wird der Motor des Kraftwagens ausgeschaltet und der Kraftwagen in einen Zustand überführt, wie er sich auch ergibt, wenn man bei einem herkömmlichen Kraftwagen den Zündschlüssel einsteckt und im Zündschloss auf die erste Schaltstufe (Zündung ein) stellt. Die genannte Steuereinrichtung kann beispielsweise ein Steuergerät oder ein Programmmodul eines auch für andere Zwecke genutzten Steuergeräts oder ein Verbund aus mehreren Geräten und/oder Programmmodulen sein. Welche Geräte der ersten Gerätegruppe und welche der zweiten Gerätegruppe zugeordnet sind, kann der Fachmann nach Bedarf festlegen. Als für die zweite Gerätegruppe geeignete Geräte haben sich z.B. erwiesen: der erwähnte Fensterheber, ein Kombiinstrument, eine Zentralverriegelungsinnentaste für die Bedienung vom Fahrzeuginnenraum aus, ein Bordcomputer. Insbesondere ist zumindest eines der Geräte der zweiten Gerätegruppe von allen Geräten der ersten Gerätegruppe unterschiedlich.

Das erfindungsgemäße Verfahren ergibt sich entsprechend durch den Betrieb der beschriebenen Komponenten des erfindungsgemäßen Kraftwagens. Der erfindungsgemäße Kraftwagen und das erfindungsgemäße Verfahren weisen den Vorteil auf, dass eine Person in dem Kraftwagen auch dann direkt die Komfort-Geräte nutzen kann, wenn sich der Kraftwagen zuvor im Zustand "ferngestartet" befand. Die Person muss dazu auch nicht umständlich zunächst den Normalzustand (laufender Motor und eingeschaltete Zündung) herbeiführen, um dann den Motor wieder abzuschalten und die Zündung wieder einzuschalten, um so die Komfort-Geräte anschalten zu können. Um den Zustand "Zündung ein" ausgehend vom Zustand "ferngestartet" herbeiführen zu können, ist bei einer Ausführungsform des Kraftwagens, bei welcher eine Klemme-15-Leitung gemäß DIN 72552 (DIN - Deutsche Industrienorm) bereitgestellt ist, die Steuereinrichtung dazu ausgelegt, zum Wechseln des Zustands von "ferngestartet" nach "Zündung ein" die Klemme-15-Leitung mit einer elektrischen Spannung zu beaufschlagen, als eine Versorgungsspannung z.B. für ein Schaltrelais bereitzustellen, über welches die Komfort-Geräte der zweiten Gerätegruppe mit der Batterie gekoppelt sind. Der Kraftwagen kann auch einen Kommunikationsbus aufweisen und die Steuereinrichtung in bekannter Weise dazu ausgelegt sein, zum Zuschalten der zweiten Gerätegruppe, die zweite Gerätegruppe mittels eines Bussignals betriebsbereit zu schalten oder einzuschalten. Hierdurch ergibt sich der Vorteil, dass das erfindungsgemäße Verfahren auch bei einem Kraftwagen, der eine herkömmliche Kontrolle der Komfort-Geräte über die Zündung vorsieht, in eine Ausführungsform des erfindungsgemäßen Kraftwagens aufwandsarm umgerüstet werden kann.

Eine weitere Ausführungsform des erfindungsgemäßen Kraftwagens sieht einen Diebstahlschutz vor, indem die Steuereinrichtung dazu ausgelegt ist, den Wechsel aus dem Zustand "ferngestartet" in den Zustand "Zündung ein" nur herbeizuführen, falls eine Autorisierungseinrichtung einen erfolgreichen Abschluss einer vorbestimmten Autorisierungsprozedur signalisiert. Mit Autorisierungsprozedur ist ein Vorgang gemeint, der eine Bedienberechtigung einer im Kraftwagen befindlichen Person verifiziert. Hier kann auf eine an sich aus dem Stand der Technik bekannte Autorisierungseinrichtung zugegriffen werden, wie beispielsweise die bereits beschriebene Überprüfung eines Funkschlüssels. Es kann aber auch beispielsweise ein Codewort oder PIN (Personal Identification Number) von der Person abgefragt werden.

Eine besonders bevorzugte Ausführungsform des Kraftwagens bezieht sich auf die Bedienhandlung, die an sich zum Losfahren ungeeignet ist, aber stattdessen nur den Zustandswechsel in den Zustand "Zündung ein" bewirkt. Hier ist vorgesehen, das Betätigen eines Startbedienelements zu erkennen. Das Startbedienelement ist eigentlich zum Starten der Verbrennungskraftmaschine vorgesehen. Ein solches Startbedienelement kann beispielsweise ein Startknopf oder Starttaster sein, wie er im Zusammenhang mit einem Funkschlüsselsystem bekannt ist. Um nun zwischen einem Losfahrwunsch und dem Wunsch, in den Zustand "Zündung ein" zu wechseln, zu unterscheiden, ist bei der Ausführungsform des Kraftwagens vorgesehen, gleichzeitig zu überprüfen, ob die Bremse des Kraftwagens unbetätigt ist, also die Person beispielsweise nicht das Bremspedal betätigt. Bei der Kombination Betätigen des Startbedienelements bei gleichzeitig unbetätigter Bremse wird dann in den Zustand "Zündung ein" gewechselt, in welchem dann die Verbrennungskraftmaschine ausgeschaltet ist und dafür die Komfort-Geräte betrieben werden können. Die Nutzung des Startbedienelements als Signalgeber weist den Vorteil auf, dass eine Bedienperson ein und das selbe Bedienelement zum Losfahren (Startbedienelement betätigen und gleichzeitig Bremse betätigen) als auch zur Herbeiführung des Zustands "Zündung ein" (Startbedienelement betätigen und gleichzeitig Bremse nicht betätigen) nutzen kann.

Um bei einem versehentlichen Auslösen des Fernstartsignals nicht unnötig viel Kraftstoff durch Betreiben der Verbrennungskraftmaschine zu verbrauchen, sieht eine Ausführungsform des Kraftwagens vor, durch eine Zeitsteuerung des Kraftwagens eine Zeitdauer seit dem Wechsel in den Zustand "ferngestartet" zu erfassen und zumindest die Verbrennungskraftmaschine wieder auszuschalten, falls die erfasste Zeitdauer größer als eine vorbestimmte Höchstlaufzeit ist, also beispielsweise größer als 5 min oder 10 min. Da ein Kraftwagen dann in der Regel durch die erste Gerätegruppe für das Losfahren vorbereitet ist, wird hierdurch wird eine unnötige Abgasemission vermieden.

Dieses automatische Abschalten der Verbrennungskraftmaschine muss aber nicht immer erwünscht sein. Wird beispielsweise der Kraftwagen in den Zustand "ferngestartet" überführt, um den Kraftwageninnenraum zu beheizen, und hält sich eine Person zum Aufwärmen im Kraftwageninnenraum auf, so möchte die Person in der Regel von sich aus bestimmen, wann die Klimatisierung wieder beendet wird. Da zum Betreiben einer Klimaanlage in der Regel wegen ihres Leistungsbedarfs eine laufende Verbrennungskraftmaschine nötig ist, ist es nicht sinnvoll, in den Zustand "Zündung ein" zu wechseln. Eine Ausführungsform des Kraftwagens gibt einer Bedienperson hier eine weitere flexible Handhabung des Betriebszustands des Kraftwagens. Eine Detektionseinrichtung des Kraftwagens ermittelt, ob zumindest eine Person in dem Kraftwagen anwesend ist und signalisiert für diesen Fall eine detektierte Anwesenheit an die Steuereinrichtung als ein Detektionssignal mit dem Inhalt "Person anwesend". Die beschriebene Steuereinrichtung ist dann dahingehend erweitert, den Zustand "ferngestartet" zu beenden, falls zuvor im Zustand "ferngestartet" ein Übergang des Detektionssignals von "Person anwesend" nach "keine Person anwesend" stattfindet. Mit anderen Worten wird der Zustand "ferngestartet" beendet, also insbesondere die Verbrennungskraftmaschine ausgeschaltet, wenn alle Personen den Kraftwagen verlassen haben. Eine Personendetektion, wie sie für diese Ausführungsform nötig ist, kann in einer aus dem Stand der Technik bekannten Weise ausgeführt sein. Hier seien beispielhaft auf eine Sitzplatzbelegungserkennung, eine Überwachung des Kraftfahrzeuginnenraums durch eine Kamera, insbesondere eine Infrarotkamera und ein Überprüfen einer Zentralverriegelung genannt. Es kann aber auch auf eine beliebige andere Technologie zur Personendetektion zurückgegriffen werden.

Ist bei dem Kraftwagen sowohl eine Zeitsteuerung als auch eine Personendetektion vorhanden, so sieht eine vorteilhafte Ausführungsform des Kraftwagens vor, im Zustand "ferngestartet" nach einem nochmaligen Empfang eines Fernstartsignals die Zeitsteuereinrichtung zu deaktivieren. Mit anderen Worten muss also eine Person das Fernstartsignal ein erstes Mal auslösen, um den Kraftwagen in den Zustand "ferngestartet" zu überführen und kann dann bei nochmaligem Erzeugen des Fernstartsignals bewirken, dass die Zeitsteuerung zur automatischen Deaktivierung der Verbrennungskraftmaschine nicht aktiv ist. Die Verbrennungskraftmaschine wird also nur dann wieder abgeschaltet, wenn die Person den Kraftwagen verlässt.

Bisher wurde nur das Detektieren von Bedienhandlungen beschrieben, die nicht zum Losfahren geeignet sind. Die Steuereinrichtung des Kraftwagens ist bevorzugt natürlich auch dazu ausgelegt, im Zustand "ferngestartet" und vor dem Losfahren zu ermitteln, ob im Kraftwagen die Person eine vorbestimmte, zum Losfahren aber vorgesehene Bedienhandlung ausführt. Diese Bedienhandlung umfasst bevorzugt das Betätigen des Startbedienelements zum Starten der Verbrennungskraftmaschine bei gleichzeitig betätigter Bremse. Das Detektieren solcher Bedienhandlungen kann mit der an sich bekannten Sensorik eines Kraftwagens ermöglicht sein. Falls die Steuereinrichtung eine zum Losfahren vorgesehene Bedienhandlung erkennt, überführt sie den Kraftwagen unter durchgängigem Betrieb der Verbrennungskraftmaschine in einen Normalzustand "Motorlauf". Mit anderen Worten übernimmt die Person hierdurch die Kontrolle über den laufenden Motor von der Fernstarteinrichtung. Im Normalzustand läuft dann die Verbrennungskraftmaschine weiter und die zweite Gerätegruppe, also die Komfort-Geräte, sind der Batterie zugeschaltet. Dies ist der normale, zum Fahren des Kraftwagens vorgesehene Betriebszustand. Auch hier ist bei dem erfindungsgemäßen Kraftwagen natürlich bevorzugt eine Überprüfung der Autorisierung der Person durch eine Autorisierungseinrichtung des Kraftwagens vorgesehen, also beispielsweise das Überprüfen einer Präsenz eines Funkschlüssels im Fahrgastraum des Kraftwagens. Bei Erkennen einer unautorisierten Person durch die Autorisierungseinrichtung wird bevorzugt der Kraftwagen in einen Aus-Zustand gewechselt, in welchem die Verbrennungskraftmaschine ausgeschaltet und die erste und die zweite Gerätegruppe von der Batterie entkoppelt sind. Zumindest jedoch wird die Verbrennungskraftmaschine ausgeschaltet.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftwagens beschrieben worden sind. Aus diesem Grund sind die entsprechenden Weiterbildungen des erfindungsgemäßen Verfahrens hier nicht noch einmal beschrieben.

Im Folgenden ist die Erfindung noch einmal anhand eines konkreten Ausführungsbeispiels erläutert. Es zeigt:
- Fig. 1: eine schematische Darstellung einer Ausführungsform des erfindungsgemäßen Kraftwagens und
- Fig. 2: ein Diagramm, in welchem Zustandsübergänge des Kraftwagens von Fig. 1 veranschaulicht sind.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung auch unabhängig voneinander weiterbilden und damit auch einzeln oder in einer anderen als der gezeigten Kombination als Bestandteil der Erfindung anzusehen sind. Des Weiteren ist beschriebene Ausführungsform auch durch weitere der bereits beschriebenen Merkmale der Erfindung ergänzbar.

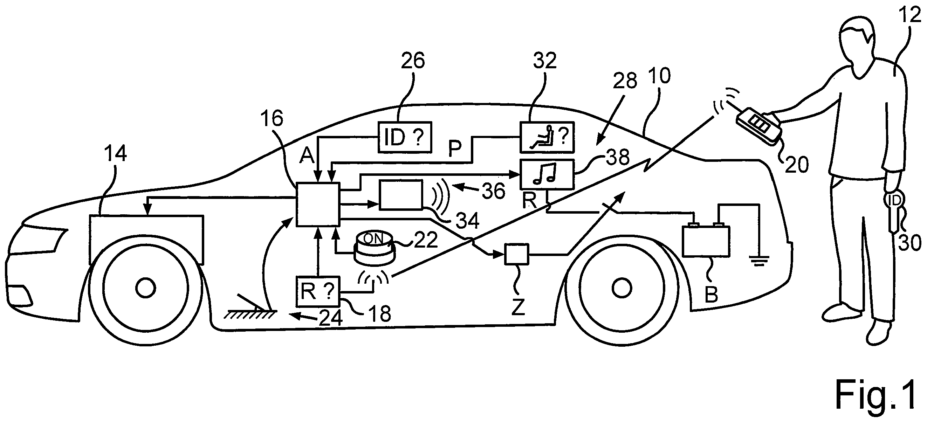

In Fig. 1 ist ein Kraftwagen 10 gezeigt, bei dem es sich beispielsweise um einen Personenkraftwagen handeln kann. Außerhalb des Kraftwagens 10 befindet sich eine Person 12, die beispielsweise ein Besitzer des Kraftwagens 10 sein kann. Der Kraftwagen 10 kann als Antriebsmotor eine Verbrennungskraftmaschine 14, also beispielsweise, einen Ottomotor oder einen Dieselmotor, aufweisen. Die Verbrennungskraftmaschine 14 kann durch eine Steuereinrichtung 16 gestartet und auch ausgeschaltet werden. Die Steuereinrichtung 16 kann beispielsweise eines oder mehrere Steuergeräte umfassen oder auch eines oder mehrere Programmmodule umfassen. Der Kraftwagen 10 kann des weiteren eine Ferristarteinrichtung 18 aufweisen. Die Fernstarteinrichtung 18 kann mit der Verbrennungskraftmaschine 14 und/oder der Steuereinrichtung 16 gekoppelt sein. Die Fernstarteinrichtung 18 kann in an sich bekannter Weise dazu ausgelegt sein, ein Fernstartsignal R von einer Fernsteuerung 20 zu empfangen, welche von der Person 12 bedient werden kann. Die Fernsteuerung 20 kann beispielsweise ein ausschließlich zum Erzeugen des Fernstartsignals R bereitgestelltes Gerät sein oder beispielsweise ein Smartphone, welches eine entsprechende Steuersoftware (APP - Applikation) aufweist, mittels welcher durch das Smartphone auf einen Bedienbefehl der Person hin das Fernstartsignal R erzeugt wird. Der Kraftwagen 10 kann des Weiteren ein Startbedienelement 22 und ein Bremspedal 24 aufweisen. Das Startbedienelement 22 kann beispielsweise ein Startknopf sein, der dazu vorgesehen ist, einen schlüssellosen Start der Verbrennungskraftmaschine 14 zu ermöglichen, wie es an sich aus dem Stand der Technik bekannt ist.

Der Kraftwagen 10 kann auch eine Autorisierungseinrichtung 26 aufweisen, die beispielsweise bei Betätigen des Startbedienelements 22 überprüft, ob sich in einem Kraftwageninnenraum 28 ein Funkschlüssel 30 befindet, in welchem Identifikationsdaten ID gespeichert sein können, durch welche die Person 12 zum Bedienen des Kraftwagens 10 autorisiert wird. Die Autorisierungseinrichtung 26 kann in an sich bekannter Weise ausgestaltet sein. Die Autorisierungseinrichtung 26 signalisiert durch ein Autorisierungssignal A beispielsweise der Steuereinrichtung 16, dass sich zu einem gegebenen Zeitpunkt der Funkschlüssel 30 in einem Fahrgastraum 28 des Kraftwagens 10 befindet.

Der Kraftwagen 10 kann des weiteren eine Detektionseinrichtung 32 aufweisen, durch welche die Anwesenheit einer Person im Fahrgastraum 28 durch ein Detektionssignal P beispielsweise der Steuereinrichtung 16 signalisiert wird. Die Detektionseinrichtung 32 kann ebenfalls auf an sich bekannter Technologie beruhen, beispielsweise einer Sitzplatzbelegungserkennung.

Der Kraftwagen 10 kann eine Klimatisierungseinrichtung 34 aufweisen, durch welche beispielsweise Warmluft 36, in den Fahrgastraum 28 eingeblasen werden kann. Die Klimatisierungseinrichtung 34 kann auch zum Beheizen beispielsweise der Verbrennungskraftmaschine 14 ausgelegt sein.

Der Kraftwagen 10 kann des Weiteren eines oder mehrere Komfort-Geräte 38 aufweisen, beispielsweise ein Infotainmentsystem, ein Medienabspielgerät (für MP3-Musikdateien oder Blu-Ray- oder DVD-Speichermedien) und/oder ein Navigationsgerät und/oder ein (oder mehrere) Fensterheber und/oder ein Kombiinstrument und/oder eine Zentralverriegelungsinnentaste und/oder ein Bordcomputer.

Eine Batterie B des Kraftwagens 10 kann zum Versorgen der Komfort-Geräte 38 mit elektrischer Leistung bereitgestellt sein. Die Komfort-Geräte 38 können durch eine Zündung Z elektrisch von der Batterie B getrennt werden. Die elektrische Verbindung zwischen der Batterie B und den Komfort-Geräten 38 kann durch die Zündung Z beispielsweise bei Empfangen eines Klemme-15-Signals hergestellt werden. Anstelle eine elektrischen Trennung durch die Zündung Z können die Komfort-Geräte 38 auch permanent mit der Batterie B verbunden sein und über einen (nicht dargestellten) Kommunikationsbus in bekannter Weise durch ein Bussignal (Klemme-15-Bussignal) aktiviert oder zumindest betriebsbereit geschaltet bzw. zum Abschalten durch ein Bussignal deaktiviert werden, so dass sie sich nicht mehr vom Fahrer bedienen lassen. Entsprechende Steuergeräte hierfür sind bekannt.

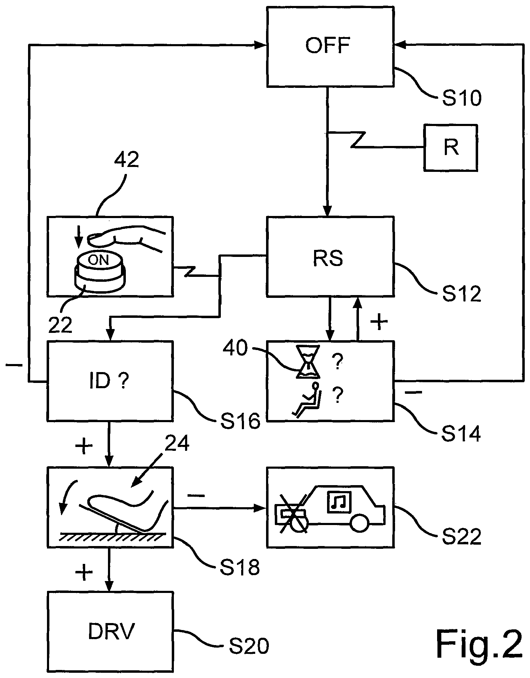

Durch die Steuereinrichtung 16 kann der Kraftwagen 10 in unterschiedliche Betriebszustände überführt werden, wie es im Folgenden anhand von Fig. 2 erläutert ist.

In einem Aus-Zustand S10 sind die Verbrennungskraftmaschine 14 und auch die Klimatisierungseinrichtung 34 und alle Komfort-Geräte 38 ausgeschaltet. Den Aus-Zustand kann der Kraftwagen 10 beispielsweise innehaben, wenn er für unbestimmte Zeit geparkt ist. Möchte die Person 12 den Kraftwagen 10 beispielsweise mittels der Klimatisierungseinrichtung 34 vorheizen oder die Verbrennungskraftmaschine 14 warmlaufen lassen, so kann die Person 12 mittels der Fernbedienung 20 von außerhalb des Kraftwagens 10 das Fernstartsignal R erzeugen, welches dann von der Fernstarteinheit 18 empfangen werden kann. Die Fernstarteinheit 18 signalisiert den Empfang des Fernstartsignals R beispielsweise an die Steuereinrichtung 16, welche dann den Kraftwagen 10 in einen Zustand S12 überführt, welcher hier auch als Zustand "ferngestartet" (RS - Remote Start, Fernstart) bezeichnet ist. Zum Herbeiführen des Zustands "ferngestartet" S12 startet die Steuereinrichtung 16 die Verbrennungskraftmaschine 14 und aktiviert die Klimatisierungseinrichtung 34. Indirekt führt also die Fernstarteinheit 18 den Zustand S12 herbei.

Im Zustand "ferngesteuert" S12 kann beispielsweise durch die Steuereinrichtung 16 an zuvor bestimmten Zeitpunkten in einem Überprüfungsschritt S14 überprüft werden, ob seit dem Übergang in den Zustand S12 eine vorbestimmte Zeitdauer vergangen ist. Dies kann beispielsweise durch eine Zeitgebereinheit oder einen Timer 40 des Kraftwagens 10 realisiert werden. Es kann auch überprüft werden, ob das Detektionssignal P der Detektionseinrichtung 32 nach dem Übergang in den Zustand S12 "ferngestartet" zunächst anzeigt, dass die Person 12 sich im Fahrgastraum 28 befand und danach wieder ausgestiegen ist. Ist der Timer 40 noch nicht abgelaufen und/oder immer noch eine Person im Fahrgastraum 28 anwesend (in Fig. 2 durch "+" symbolisiert) bleibt Kraftwagen 10 im Zustand "ferngestartet" S12. Ist dagegen der Timer 40 abgelaufen und/oder die Person 12 wieder ausgestiegen ("-"), wird der Kraftwagen 10 beispielsweise durch die Steuereinrichtung 16 z.B. wieder in den Aus-Zustand S10 überführt.

Befindet sich der Kraftwagen 10 im Zustand "ferngesteuert" S12 und wird überwacht, ob die Person 12 im Kraftwagen 10 eine Bedienhandlung 42 an zumindest einer vorbestimmten Komponente des Kraftwagens ausführt. Eine bevorzugt erkannte Bedienhandlung 42 ist hierbei das Betätigen des Startbedienelements 22. Wird die Bedienhandlung ausgeführt, so kann vorgesehen sein, dass zunächst durch die Autorisierungseinrichtung 26 in einer Autorisierungsprozedur S16 überprüft wird, ob die bedienende Person 12 zum Bedienen des Kraftwagens 10 autorisiert ist. Hierzu kann beispielsweise die Gegenwart des Funkschlüssels 30 im Fahrgastraum 28 überprüft werden. Ist die bedienende Person nicht autorisiert (-), so kann der Kraftwagen 10 beispielsweise in den Aus-Zustand S10 überführt werden. Wird in der Autorisierungsprozedur S16 eine autorisierte Person erkannt (+), so kann dann in einem Schritt S18 entschieden werden, ob die Bedienhandlung 42 zum Losfahren mit dem Kraftwagen 10 gedacht war oder lediglich eine zum Losfahren nicht vorgesehene Bedienhandlung ausgeführt wurde. Beispielsweise kann hierzu überprüft werden, ob das Bremspedal 24 durch die Person 12 während des Betätigens des Startbedienelements 22 gleichzeitig betätigt wurde.

Hat die Person 12 das Startbedienelement 22 betätigt und hierbei gleichzeitig das Bremspedal 24 getreten (+), so wird dies als Losfahrwunsch gewertet und der Kraftwagen 10 beispielsweise durch die Steuereinrichtung 16 in einen Normalzustand S20 (DRV - Drive, Fahren) überführt, in welchem die Verbrennungskraftmaschine 14 weiterbetrieben wird und gleichzeitig auch die Komfort-Geräte 38 beispielsweise an die Batterie B des Kraftwagens 10 zugeschaltet werden. Der Fahrer, d. h. die Person 12, kann dann alle Geräte des Kraftfahrzeugs 10 in an sich bekannter Weise nutzen und auch mit dem Kraftwagen 10 losfahren.

Beim Übergang vom Zustand "ferngesteuert" S12 in den Normalzustand S20 wird die Verbrennungskraftmaschine 14 durchgehend betrieben. Es kommt also nicht zu einem Abbruch des Motorlaufes, stattdessen kann der Motorlauf von der Person 12 aus dem Zustand "ferngesteuert" S12 zum Losfahren übernommen werden. Dies hat den Vorteil, dass die Person 12 den Kraftwagen 10 durch Übernahme in den Zustand bringen kann, den sie benötigt.

Führt die Person 12 dagegen eine Bedienhandlung 42 aus, die nicht zum Losfahren geeignet ist (-), so wird der Kraftwagen 10 beispielsweise durch die Steuereinrichtung 16 in einen Zustand "Zündung ein" S22 überführt. In dem Zustand S22 ist die Verbrennungskraftmaschine 14 wieder ausgeschaltet, dafür aber die Komfort-Geräte 38 mit der Batterie elektrisch verbunden, sodass die Komfort-Geräte 38 von der Person 12 genutzt werden können.

Durch die Übernahmefunktion ausgehend vom Fernstart (remote start) im Zustand S12 ergeben sich insgesamt insbesondere vier besonders vorteilhafte Endzustände.
1. Der Normalfall "Autorisierte Übernahme": Die Person 12 macht eine Startbedienung 42 über das Startbedienelement 22 (üblicherweise Druck eines Kessy-Tasters mit betätigter Bremse 24). Wird also Folge dieser Startbedienung ein zum Kraftwagen 12 gehörender Schlüssel 30 im Innenraum, d. h. Fahrgastraum 28, gefunden, dann wird der Kraftwagen 10 in den Normalzustand (Motorlauf) S20 gebracht, sodass die Person 12 losfahren kann.
2. "Nicht autorisierter Übernahmeversuch": Eine Person macht eine Startbedienung 42 über das Startbedienelement 22 (also wieder üblicherweise das Drücken eines Kessy-Tasters mit betätigter Bremse 24). Wird als Folge dieser Startbedienung kein zum Kraftwagen 10 gehörender Schlüssel 30 im Fahrgastraum 28 gefunden, dann wird der Motorlauf beendet (z. B. Übergang in den Aus-Zustand S12). Ein Losfahren mit dem Kraftwagen 10 ist nicht möglich (Diebstahlschutzmaßnahme).
3. "Autorisierte Übernahme, Beendigung des Motorlaufs und Einschalten der Zündung": Die Person 12 macht über das Startbedienelement 22 eine Bedienung 42 zum Einschalten der Zündung Z ohne Motorlauf, d. h. bei ausgeschalteter Verbrennungskraftmaschine 14 (üblicherweise ist dies durch Drücken des Kessy-Tasters 22 ohne betätigte Bremse 24 signalisierbar).
   Wird als Folge der Bedienung 42 ein zum Fahrzeug gehörender Schlüssel 30 im Innenraum 28 gefunden, dann wird der Kraftwagen 10 in den Zustand "Zündung eingeschaltet + Kein Motorlauf" S22 gebracht, die Person kann die Komfort-Geräte und andere Nutzungsmöglichkeiten bei eingeschalteter Zündung Z nutzen.
4. "Keine Übernahme": Es erfolgt keine Bedienung des Startbedienelements 22, sodass der Zustand "ferngestartet" (remote start) weiterläuft (Zustand S12).
5. (Optionaler Zustand) "remote start Weiterlauf solange Fahrer anwesend": Es erfolgt eine Bedienung des remote start Bedienelements (beispielsweise der Funkfernbedienung 20, einer App) und/oder eine Bedienung am Klimabedienteil der Klimatisierungseinrichtung 34. Wird bei dieser Bedienung eine Fahreranwesenheit P im Fahrgastraum 38 erkannt, dann wird der remote start-Motorlauf solange weitergeführt, wie der Fahrer, d. h. die Person 12 anwesend ist. Die Person 12 kann den Klimatisierungskomfort der Klimatisierungseinrichtung 34 weiter nutzen. Bei Bedarf kann hier der remote start (Zustand S12) auch nach Ablauf eines Timers 40 abgebrochen werden. Wird eine Fahrerabwesenheit erkannt, also beispielsweise durch das Detektionssignal P der Steuereinrichtung 16 signalisiert, so wird der Motorlauf beendet, d. h. die Verbrennungskraftmaschine 14 ausgeschaltet.

## Patentansprüche

1. Kraftwagen (10) mit einer Fernstarteinheit (18), welche dazu ausgelegt ist, ein Fernstartsignal (R) drahtlos von außerhalb des Kraftwagens (10) zu empfangen und bei Empfangen des Fernstartsignals (R) eine Verbrennungskraftmaschine (14) des Kraftwagens (10) zu starten sowie ausschließlich eine vorbestimmte ersten Gerätegruppe (34) aus zumindest einem Gerät (34) des Kraftwagens (10), das ein Losfahren mit dem Kraftwagen (10) vorzubereiten ausgelegt ist, zu aktivieren und hierdurch den Kraftwagen (10) in einen Zustand "ferngestartet" (S12) zu überführen, wobei die erste Gerätegruppe (34) zumindest eine Klimatisierungseinrichtung (34) zum Heizen und/oder Kühlen eines Fahrgastraumes (28) und/oder der Verbrennungskraftmaschine (14) umfasst,
**dadurch gekennzeichnet, dass**
eine Steuereinrichtung (16) des Kraftwagens (10) dazu ausgelegt ist, im Zustand "ferngestartet" (S12) und vor dem Losfahren zu ermitteln, ob im oder am Kraftwagen (10) eine Person (12) eine vorbestimmte, zum Losfahren ungeeignete Bedienhandlung ausführt, wobei die Steuereinrichtung (16) dazu ausgelegt ist, als die vorbestimmte, zum Losfahren ungeeignete Bedienhandlung zumindest das Betätigen (42) eines Startbedienelements (22) zum Starten der Verbrennungskraftmaschine (14) bei gleichzeitig unbetätigter Bremse (24) zu erkennen, und, falls die Steuereinrichtung die ungeeignete Bedienhandlung erkennt, den Kraftwagen (10) in einen Zustand "Zündung ein" (S22) zu überführen, in welchem die Verbrennungskraftmaschine (14) ausgeschaltet ist und eine vorbestimmte zweite Gerätegruppe (38) aus zumindest einem Komfort-Gerät (38) des Kraftwagens (10), das von allen Geräten der ersten Gerätegruppe unterschiedlich ist, betriebsbereit geschaltet oder eingeschaltet ist, wobei die Steuereinrichtung (16) dazu ausgelegt ist, den Wechsel aus dem Zustand "ferngestartet" (S12) in den Zustand "Zündung ein" (S22) nur herbeizuführen, falls eine Autorisierungseinrichtung (26) einen erfolgreichen Abschluss einer vorbestimmten Autorisierungsprozedur (S16) signalisiert, wobei die Autorisierungsprozedur (S16) dazu ausgelegt ist, eine Bedienberechtigung (ID) der Person zu verifizieren.

2. Kraftwagen (10) nach Anspruch 1, wobei der Kraftwagen (10) eine Klemme-15-Leitung gemäß DIN 72552 aufweist und die Steuereinrichtung (16) dazu ausgelegt ist, zum Zuschalten der zweiten Gerätegruppe (38) an die Batterie (B) beim Wechsel vom Zustand "ferngestartet" (S12) in den Zustand "Zündung ein" (S22) die Klemme-15-Leitung mit einer elektrischen Spannung zu beaufschlagen, oder wobei der Kraftwagen (10) einen Kommunikationsbus aufweist und die Steuereinrichtung (16) dazu ausgelegt ist, zum Zuschalten der zweiten Gerätegruppe (38), die zweite Gerätegruppe mittels eines Bussignals betriebsbereit zu schalten oder einzuschalten.

3. Kraftwagen (10) nach einem der vorhergehenden Ansprüche, wobei eine Zeitsteuerung (40) bereitgestellt ist, die dazu ausgelegt ist, eine seit dem Wechsel in den Zustand "ferngestartet" (S12) vergangene Zeitdauer zu erfassen und zumindest die Verbrennungskraftmaschine (14) wieder auszuschalten, falls die erfasste Zeitdauer größer als eine vorbestimmter Höchstlaufzeit ist.

4. Kraftwagen (10) nach einem der vorhergehenden Ansprüche, wobei eine Detektionseinrichtung (32) in dem Kraftwagen bereitgestellt ist, welche dazu ausgelegt ist, eine Anwesenheit zumindest einer Person (12) in dem Kraftwagen zu detektieren und eine detektierte Anwesenheit an die Steuereinrichtung (16) als "Person anwesend" mittels eines Detektionssignals (P) zu signalisieren, und wobei die Steuereinrichtung dazu ausgelegt ist, zumindest die Verbrennungskraftmaschine wieder auszuschalten, falls im Zustand "ferngestartet" (S12) ein Übergang des Detektionssignals (P) von "Person anwesend" nach "keine Person anwesend" (S14) stattfindet.

5. Kraftwagen (10) nach Anspruch 4 in Rückbezug auf Anspruch 3, wobei die Steuereinrichtung (16) dazu ausgelegt ist, im Zustand "ferngestartet" (S12) bei Empfang eines weiteren Fernstartsignals (R) und/oder bei einer Bedienung eines Geräts (34) aus der ersten Gerätegruppe (34) die Zeitsteuereinrichtung (40) zu deaktivieren.

6. Kraftwagen (10) nach einem der vorhergehenden Ansprüche, wobei die Steuereinrichtung (16) dazu ausgelegt ist, im Zustand "ferngestartet" (S12) und vor dem Losfahren zu ermitteln, ob im Kraftwagen (10) die Person (12) eine vorbestimmte, zum Losfahren vorgesehene Bedienhandlung ausführt, und gegebenenfalls den Kraftwagen (10) unter durchgängigem Betrieb der Verbrennungskraftmaschine (14) in einen Normalzustand "Motorlauf" (S20) zu überführen, in welchem die Verbrennungskraftmaschine (14) läuft und die zweite Gerätegruppe (38) an die Batterie (B) zugeschaltet ist, wobei der Wechsel in den Normalzustand (S20) voraussetzt, dass eine autorisierte Person (12) die zum Losfahren geeignete Bedienhandlung durchführt, und bei Erkennen einer unautorisierten Person durch eine Autorisierungseinrichtung (26) der Kraftwagen (10) stattdessen in einen Aus-Zustand (S10) wechselt, in welchem zumindest die Verbrennungskraftmaschine (14) ausgeschaltet ist.

7. Kraftwagen (10) nach einem der vorhergehenden Ansprüche, wobei die zweite Gerätegruppe (38) zumindest ein Infotainmentsystem umfasst.

8. Verfahren zum Steuern eines Betriebszustands eines Kraftwagens (10), welcher eine Fernstarteinheit (18) aufweist, die bei Empfangen eines Fernstartsignals (R) von Außerhalb des Kraftwagens eine Verbrennungskraftmaschine (14) des Kraftwagens (10) startet und ausschließlich eine vorbestimmte erste Gerätegruppe (34) aus zumindest einem ein Losfahren mit dem Kraftwagen (10) vorbereitenden Gerät (34) des Kraftwagens (10) aktiviert und hierdurch den Kraftwagen (10) in einen Zustand "ferngestartet" (S12) überführt, wobei die erste Gerätegruppe (34) zumindest eine Klimatisierungseinrichtung (34) zum Heizen und/oder Kühlen eines Fahrgastraumes (28) und/oder der Verbrennungskraftmaschine (14) umfasst,
**dadurch gekennzeichnet, dass**
eine Steuereinrichtung (16) des Kraftwagens (10) im Zustand "ferngestartet" (S12) vor dem Losfahren ermittelt, ob im oder am Kraftwagen (10) eine Person (10) eine vorbestimmte, zum Losfahren ungeeignete Bedienhandlung ausführt, wobei durch die Steuereinrichtung (16) als die vorbestimmte, zum Losfahren ungeeignete Bedienhandlung zumindest das Betätigen (42) eines Startbedienelements (22) zum Starten der Verbrennungskraftmaschine (14) bei gleichzeitig unbetätigter Bremse (24) erkannt wird, und, falls durch die Steuereinrichtung die ungeeignete Bedienhandlung erkannt wird, den Kraftwagen (10) in einen Zustand "Zündung ein" (S22) überführt, indem die Verbrennungskraftmaschine (14) ausgeschaltet und eine vorbestimmte zweite Gerätegruppe (38) aus zumindest einem Komfort-Gerät (38) des Kraftwagens (10) an eine Batterie (B) des Kraftwagens zum Betreiben der zweiten Gerätegruppe (38) zugeschaltet wird, wobei die Steuereinrichtung (16) den Wechsel aus dem Zustand "ferngestartet" (S12) in den Zustand "Zündung ein" (S22) nur herbeiführt, falls eine Autorisierungseinrichtung (26) einen erfolgreichen Abschluss einer vorbestimmten Autorisierungsprozedur (S16) signalisiert, wobei durch die Autorisierungsprozedur (S16) eine Bedienberechtigung (ID) der Person verifiziert wird.

## Claims

1. Motor vehicle (10) with a remote starting unit (18) which is designed to receive a remote starting signal (R) wirelessly from outside of the motor vehicle (10) and, on reception of the remote starting signal (R), to start up a combustion engine (14) of the motor vehicle (10) as well as to activate exclusively a prespecified first device group (34), consisting of at least one device (34) of the motor vehicle (10), which is designed to prepare the motor vehicle (10) to be driven away, and as a result to place the motor vehicle (10) in a "remotely started" mode (S12), wherein the first device group (34) comprises at least one climate conditioning system (34) for heating and/or cooling a passenger compartment (28), and/or the combustion engine (14),
**characterised in that**
a control device (16) of the motor vehicle (10) is designed to determine, in the "remotely started" mode (S12), and before the vehicle is driven away, whether a person (12) carries out, in or on the motor vehicle (10), a prespecified operating action unsuitable for the purpose of driving away, wherein the control device (16) is designed to recognise, as the prespecified operating action unsuitable for the purpose of driving away, at least the actuation (42) of a starting control element (22) in order to start the combustion engine (14) while the brake (24) is at the same time not activated and, if the control device detects the unsuitable operating action, to switch the motor vehicle (10) to an "ignition on" mode (S22) in which the combustion engine (14) is switched off and a prespecified second device group (38) consisting of at least one comfort device (38) of the motor vehicle (10) which is different from all the devices of the first device group is switched to standby mode or switched on, wherein the control device (16) is designed only to initiate the change from the "remotely started" mode (S12) to the "ignition on" mode (S22) if an authorisation system (26) signals successful completion of a prespecified authorisation procedure (S16), wherein the authorisation procedure (S16) is designed to verify an operator authorisation (ID) of the person.

2. Motor vehicle (10) according to claim 1, wherein the motor vehicle (10) has a terminal 15 cable according to DIN 72552 and the control device (16) is designed to apply electrical voltage to the terminal 15 cable in order to connect the second device group (38) to the battery (B) on changing from the "remotely started" mode (S12) to the "ignition on" mode (S22), or wherein the motor vehicle (10) has a communication bus and the control device (16) is designed, in order to connect the second device group (38), to switch to standby mode or switch on the second device group by means of a bus signal.

3. Motor vehicle (10) according to any one of the preceding claims, wherein a time control (40) is provided which is designed to detect a period of time which has elapsed since the change to the "remotely started" mode (S12) and to switch off again at least the combustion engine (14) if the detected period of time is greater than a pre-specified maximum run time.

4. Motor vehicle (10) according to any one of the preceding claims, wherein a detection device (32) is provided in the motor vehicle which is designed to detect a presence of at least one person (12) in the motor vehicle and to signal a detected presence to the control device (16) as "person present" by means of a detection signal (P), and wherein the control device is designed to switch off again at least the combustion engine if, in the "remotely started" mode (S12), the detection signal (P) changes from "person present" to "no person present" (S14).

5. Motor vehicle (10) according to claim 4, with reference back to claim 3, wherein said control device (16) is designed, in the "remotely started" mode (S12), on reception of a further remote starting signal (R) and/or on actuation of a device (34) from the first device group (34), to deactivate the time control device (40).

6. Motor vehicle (10) according to any one of the preceding claims, wherein the control device (16) is designed, in the "remotely started" mode (S12), and before the vehicle is driven away, to determine whether the person (12) carries out a prespecified operating action in the motor vehicle (10) for the purpose of driving away, and if appropriate to switch the motor vehicle (10), while the combustion engine (14) is operating continuously, into a normal "engine running" mode (S20), in which the combustion engine (14) is running and the second device group (38) is connected to the battery (B), wherein the change to the normal mode (S20) requires that an authorised person (12) is carrying out the operating action for the purpose of driving away and, on detection of an unauthorised person by an authorisation system (26), instead changes the motor vehicle (10) to an off mode (S10), in which at least the combustion engine (14) is switched off.

7. Motor vehicle (10) according to any one of the preceding claims, wherein the second device group (38) comprises at least one infotainment system.

8. Method for controlling an operating mode of a motor vehicle (10) which has a remote starting unit (18) which, on reception of a remote starting signal (R) from outside of the motor vehicle, starts up a combustion engine (14) of the motor vehicle (10) and activates exclusively a prespecified first device group (34), consisting of at least one device (34) of the motor vehicle (10), which is designed to prepare the motor vehicle (10) to be driven away, and as a result places the motor vehicle (10) in a "remotely started" mode (S12), wherein the first device group (34) comprises at least one climate conditioning system (34) for heating and/or cooling a passenger compartment (28), and/or the combustion engine (14), **characterised in that**
a control device (16) of the motor vehicle (10) is determines, in the "remotely started" mode (S12), and before the vehicle is driven away, whether a person (10) carries out, in or on the motor vehicle (10), a prespecified operating action unsuitable for the purpose of driving away, wherein the control device (16) recognises, as the prespecified operating action unsuitable for the purpose of driving away, at least the actuation (42) of a starting control element (22) in order to start the combustion engine (14) while the brake (24) is at the same time not activated and, if the control device detects the unsuitable operating action, switches the motor vehicle (10) to an "ignition on" mode (S22) in which the combustion engine (14) is switched off and a prespecified second device group (38) consisting of at least one comfort device (38) of the motor vehicle (10) is connected to a battery (B) of the motor vehicle in order to operate the second device group (38), wherein the control device (16) only initiates the change from the "remotely started" mode (S12) to the "ignition on" mode (S22) if an authorisation system (26) signals successful completion of a prespecified authorisation procedure (S16), wherein an operator authorisation (ID) of the person is verified by means of an authorisation procedure (S16).

## Revendications

1. Véhicule automobile (10) avec une unité de démarrage à distance (18), qui est configurée pour recevoir sans fil un signal de démarrage à distance (R) depuis l'extérieur du véhicule automobile (10) et pour démarrer, à réception du signal de démarrage à distance (R), un moteur à combustion interne (14) du véhicule automobile (10) ainsi que pour activer exclusivement un premier groupe d'appareils (34) prédéfini composé d'au moins un appareil (34) du véhicule automobile (10), qui est configuré pour préparer un départ avec le véhicule automobile (10) et pour amener ce faisant le véhicule automobile (10) dans un état « démarré à distance » (S12), dans lequel le premier groupe d'appareils (34) comprend au moins un dispositif de climatisation (34) servant à chauffer et/ou à refroidir un habitacle (28) et/ou le moteur à combustion interne (14),
**caractérisé en ce que**
un dispositif de commande (16) du véhicule automobile (10) est configuré pour déterminer dans l'état « démarré à distance » (S12) et avant le départ si une personne (12) exécute une manoeuvre d'utilisation prédéfinie inadaptée au départ dans ou sur le véhicule automobile (10), dans lequel le dispositif de commande (16) est configuré pour identifier, comme étant la manoeuvre d'utilisation prédéfinie inadaptée au départ, au moins l'actionnement (42) d'un élément d'utilisation de démarrage (22) servant à démarrer le moteur à combustion interne (14) lorsque dans le même temps le frein (24) n'est pas actionné et pour amener, si le dispositif de commande identifie la manoeuvre d'utilisation inadaptée, le véhicule automobile (10) dans un état « contact mis » (S22), dans lequel le moteur à combustion interne (14) est arrêté et un deuxième groupe d'appareils (38) prédéfini composé d'au moins un appareil de confort (38) du véhicule automobile (10), qui est différent de tous les appareils du premier groupe d'appareil, est activé ou mis en service en état de fonctionnement, dans lequel le dispositif de commande (16) est configuré pour entraîner le passage de l'état « démarrage à distance » (S12) dans l'état « contact mis » (S22) seulement si un dispositif d'autorisation (26) signale une fin réalisée avec succès d'une procédure d'autorisation (S16) prédéfinie, dans lequel la procédure d'autorisation (S16) est configurée pour vérifier un droit d'utilisation (ID) de la personne.

2. Véhicule automobile (10) selon la revendication 1, dans lequel le véhicule automobile (10) présente une ligne à 15 bornes de connexion selon la norme DIN 72552 et le dispositif de commande (16) est configuré pour soumettre la ligne à 15 bornes de connexion à une tension électrique afin de brancher le deuxième groupe d'appareils (38) sur la batterie (B) lors du passage de l'état « démarré à distance » (S12) dans l'état « contact mis » (S22) ou dans lequel le véhicule automobile (10) présente un bus de communication et le dispositif de commande (16) est configuré pour activer ou mettre en service en état de fonctionnement le deuxième groupe d'appareils au moyen d'un signal de bus afin de brancher le deuxième groupe d'appareils (38).

3. Véhicule automobile (10) selon l'une des revendications précédentes, dans lequel une commande de temps (40) est fournie, laquelle est configurée pour détecter une durée écoulée depuis le passage dans l'état « démarré à distance » (S12) et pour arrêter à nouveau au moins le moteur à combustion interne (14) si la durée détectée est plus importante qu'une période maximale prédéfinie.

4. Véhicule automobile (10) selon l'une des revendications précédentes, dans lequel un dispositif de détection (32) est fourni dans le véhicule automobile, lequel est configuré pour détecter une présence au moins d'une personne (12) dans le véhicule automobile et pour signaler une présence détectée au dispositif de commande (16) en tant que « personne présente » au moyen d'un signal de détection (P) et dans lequel le dispositif de commande est configuré pour arrêter à nouveau au moins le moteur à combustion interne si dans l'état « démarré à distance » (S12), si le signal de détection (P) passe de « personne présente » à « aucune personne présente » (S14).

5. Véhicule automobile (10) selon la revendication 4 en lien avec la revendication 3, dans lequel le dispositif de commande (16) est configuré pour désactiver, dans l'état « démarré à distance » (S12), à réception d'un autre signal de démarrage à distance (R) et/ou lors d'une utilisation d'un appareil (34) issu du premier groupe d'appareils (34), le dispositif de commande de temps (40).

6. Véhicule automobile (10) selon l'une des revendications précédentes, dans lequel le dispositif de commande (16) est configuré pour déterminer, dans l'état « démarré à distance » (S12) et avant le départ si dans le véhicule automobile (10), la personne (12) exécute une manoeuvre d'utilisation prédéfinie prévue aux fins du départ et pour éventuellement amener le véhicule automobile (10), alors que le moteur à combustion interne (14) continue de fonctionner, dans un état normal « fonctionnement du moteur » (S20), dans lequel le moteur à combustion interne (14) tourne et le deuxième groupe d'appareils (38) est branché sur la batterie (B), dans lequel le passage dans l'état normal (S20) présuppose qu'une personne (12) autorisée effectue la manipulation d'utilisation adaptée au départ et dans lequel en cas d'identification d'une personne non autorisée par un dispositif d'autorisation (26), le véhicule automobile (10) passe en lieu et place dans un état arrêté (S10), dans lequel au moins le moteur à combustion interne (14) est arrêté.

7. Véhicule automobile (10) selon l'une des revendications précédentes, dans lequel le deuxième groupe d'appareils (38) comprend au moins un système d'info-divertissement.

8. Procédé servant à commander un état de fonctionnement d'un véhicule automobile (10), qui présente une unité de démarrage à distance (18), qui démarre, à réception d'un signal de démarrage à distance (R) provenant de l'extérieur du véhicule automobile, un moteur à combustion interne (14) du véhicule automobile (10) et qui active exclusivement un premier groupe d'appareils (34) prédéfini composé d'au moins un appareil (34), préparant un départ avec le véhicule automobile (10), du véhicule automobile (10) et passe ce faisant le véhicule automobile (10) dans un état « démarré à distance » (S12), dans lequel le premier groupe d'appareils (34) comprend au moins un dispositif de climatisation (34) servant à chauffer et/ou à refroidir un habitacle (28) et/ou le moteur à combustion interne (14),
**caractérisé en ce que**
un dispositif de commande (16) du véhicule automobile (10) détermine dans l'état « démarré à distance » (S12) avant le départ si une personne (10) exécute, dans ou sur le véhicule automobile (10), une manipulation d'utilisation prédéfinie inadaptée au départ, dans lequel au moins l'actionnement (42) d'un élément d'utilisation de démarrage (22) servant à démarrer le moteur à combustion interne (14) lorsque dans le même temps le frein (24) n'est pas actionné est identifié par le dispositif de commande (16) comme étant la manipulation d'utilisation prédéfinie inadaptée au départ, et, si la manipulation d'utilisation inadaptée est identifiée par le dispositif de commande, amène le véhicule automobile (10) dans un état « contact mis » (S22) **en ce que** le moteur à combustion interne (14) est arrêté et qu'un deuxième groupe d'appareils (38) prédéfini composé d'au moins un appareil de confort (38) du véhicule automobile (10) est branché sur une batterie (B) du véhicule automobile afin de faire fonctionner le deuxième groupe d'appareils (38), dans lequel le dispositif de commande (16) entraîne le passage de l'état « démarré à distance » (S12) dans l'état « contact mis » (S22) seulement si un dispositif d'autorisation (26) signale une fin réalisée avec succès d'une procédure d'autorisation (S16) prédéfinie, dans lequel une autorisation d'utilisation (ID) de la personne est vérifiée par la procédure d'autorisation (S16).
